# EUROPÄISCHE PATENTSCHRIFT

(11) **EP 1 864 551 B1**
(45) Veröffentlichungstag und Bekanntmachung des Hinweises auf die Patenterteilung: **13.05.2009**
(21) Anmeldenummer: 06723883.2
(22) Anmeldetag: 31.03.2006
(51) Int. Cl.: H05B 3/28, F24D 13/02, E04B 1/82

(54) **FLÄCHENHEIZEINRICHTUNG**
PANEL HEATING DEVICE
DISPOSITIF DE CHAUFFAGE DE SURFACE

(30) Priorität: 31.03.2005 DE 102005015051
(43) Veröffentlichungstag der Anmeldung: 12.12.2007
(73) Patentinhaber: EWALD DÖRKEN AG, 58313 Herdecke (DE)
(72) Erfinder: RAIDT, Heinz, Peter, 44227 Dortmund (DE); SCHRÖER, Jörn, 58313 Herdecke (DE)
(74) Vertreter: Gesthuysen, von Rohr & Eggert
(86) Internationale Anmeldenummer: PCT/EP2006/002920
(87) Internationale Veröffentlichungsnummer: WO 2006/103081

(56) Entgegenhaltungen:
- EP-A- 1 429 080
- FR-A- 2 800 445
- US-A- 3 704 359
- US-A- 3 779 547
- US-A1- 2003 052 114

## Beschreibung

Die Erfindung betrifft eine Flächenheizeinrichtung zur Anordnung im Bodenbereich, nach dem Oberbegriff des Anspruchs 1.

Eine Flächenheizeinrichtung der eingangs genannten Art ist bereits aus der US2003/0052114 A1 bekannt. Bei der bekannten Flächenheizeinrichtung sind die elektrisch leitfähige Schicht und die elektrischen Zuleitungen zwischen zwei elektrisch isolierenden Schichten angeordnet. Bedarfsweise kann eine Schalldämmschicht vorgesehen sein, die auf den Schichtenverbund aufgelegt oder unterhalb des Schichtenverbundes angeordnet werden kann. Nachteilig ist, daß es trotz der elektrisch isolierenden Schichten dennoch zu Beeinträchtigungen der Funktion der Flächenheizeinrichtung kommen kann. Ein weiterer Nachteil ist, daß die bedarfsweise Anordnung der Schalldämmschicht einen zusätzlichen Verlegeaufwand bedeutet.

Vergleichbare Flächenheizeinrichtungen sind aus der EP-A-1 429 080, US-A-3,704,359 und FR-A-2 800 445 bekannt.

Aufgabe der vorliegenden Erfindung ist es nun, eine Flächenheizeinrichtung der eingangs genannten Art zur Verfügung zu stellen, die einfach zu verlegen und im übrigen uneingeschränkt in allen Wohnbereichen problemlos einsetzbar ist.

Die vorgenannte Aufgabe ist bei einer Flächenheizeinrichtung der eingangs genannten Art erfindungsgemäß im wesentlichen dadurch gelöst, daß wenigstens eine Schalldämmschicht vorgesehen ist. Die erfindungsgemäße Flächenheizeinrichtung zur Anordnung im Bodenbereich hat damit eine Doppelfunktion, nämlich zusätzlich zu der Heizfunktion eine Schalldämmfunktion. Dadurch, daß die Schalldämmschicht integraler Bestandteil der Flächenheizeinrichtung ist, ist es nicht mehr erforderlich, eine weitere Sehalldämmschicht unterhalb des Belags oder aber des Estrichs vorzusehen. Die erfindungsgemäße Flächenheizeinrichtung kann unmittelbar auf den Estrich aufgelegt werden und auf die Flächenheizeinrichtung wiederum der Bodenbelag, so daß sich ein sehr einfacher Schichtaufbau ergibt. Da die erfindungsgemäße Flächenheizeinrichtung nicht in den Estrich eingebettet wird, sondern mit der Schalldämmschicht auf diesen aufgelegt werden kann, ergeben sich auch gute Wirkungsgrade bezüglich der Heizleistung.

Von Vorteil ist es im übrigen, wenn zusätzlich zur Schalldämmschicht wenigstens eine erste Schicht aus einem elektrisch isolierenden und flüssigkeitsdichten Material vorgesehen ist. Durch die Verwendung wenigstens einer elektrisch isolierenden und flüssigkeitsdichten Schicht ergibt sich bei der erfindungsgemäßen Flächenheizeinrichtung der zusätzliche Vorteil, daß ein Wasserdurchtritt durch die Flächenheizung nicht möglich ist. Es ergibt sich damit eine Abdichtung in der Ebene.

Von besonderem Vorteil ist es, daß zusätzlich zur ersten Schicht eine weitere, zweite Schicht aus einem elektrisch isolierenden und flüssigkeitsdichten Material vorgesehen ist, wobei die elektrisch leitfähige Schicht und die elektrischen Zuleitungen zwischen der ersten Schicht und der zweiten Schicht angeordnet sind. Hierdurch ergibt sich ein Verbund- bzw. Schichtmaterial, das gleichzeitig mehrere Funktionen erfüllt. Durch die Materialwahl der ersten und der zweiten Schicht ergibt sich nicht nur eine elektrische Isolierung, sondern gleichzeitig auch eine sichere Flüssigkeits-, Feuchtigkeits- bzw. Wasserabdichtung in der Ebene. Durch die elektrische Isolierung der elektrisch leitenden Schicht und der Zuleitungen kann die erfindungsgemäße Flächenheizung auch in Wohnbereichen eingesetzt werden, in denen regelmäßig ein Feuchtigkeitseinfluß zu befürchten ist, wie beispielsweise in Bädern. Selbst wenn die erfindungsgemäße Flächenheizung außenseitig mit Feuchtigkeit in Kontakt kommt, wird hierdurch ihre Funktion nicht beeinträchtigt. Ein Auftreten von Fehlströmen ist nicht zu befürchten.

Gerade bei Verwendung von Polypropylen aber auch bei Verwendung anderer Polymermaterialien ist es möglich, den Schichtenverbund der Flächenheizeinrichtung als Dampfsperre mit einer Dampfdurchlässigkeit nach DIN 52615 (23/0 → 85) von kleiner 10 g/(m² x 24h), vorzugsweise kleiner 5 g/(m² x 24h), und insbesondere kleiner 1 g/(m² x 24h), auszubilden. Hierdurch übernehmen die erste und/oder die zweite Schicht zusätzlich zu den vorgenannten isolierenden und abdichtenden Funktionen eine weitere Funktion, durch die sichergestellt wird, daß Wasserdampf aus dem Untergrund nicht oder allenfalls in sehr geringem Maße bis an den auf die Flächenheizung aufgebrachten Belag dringen und den Belag bzw. dessen Verbindung zur Flächenheizeinrichtung beeinträchtigen, oder daß zum Beispiel im Badbereich Feuchtigkeit in die unter der Flächenheizung liegende Konstruktion eindringt.

Als Schalldämmaterial der Schalldämmschicht kann grundsätzlich jedes für diesen Zweck bekannte Material eingesetzt werden, beispielsweise voluminöses Fasermaterial, Mineralwolle, geschäumtes Material und/oder Korkmaterial. Auch der Einsatz von Verbundmaterialien, wie beispielsweise von Teppichmaterial, oder aber Zusammensetzungen der vorgenannten Materialien sind ohne weiteres möglich. Um eine gute Schalldämmfunktion ausüben zu können, sollte die Dicke der Schalldämmschicht im übrigen um ein Mehrfaches größer sein als die Dicke der elektrisch leitfähigen Schicht, die wiederum vergleichsweise gering sein kann. In Abhängigkeit vom Dämmaterial und dessen Dicke läßt sich eine Trittschalltninderung von mindestens 10 dB erzielen. Bei bestimmten Materialien und Dicken betrug die Trittschallminderung bis zu 26 dB.

Bei Versuchen, die durchgeführt worden sind, ist festgestellt worden, daß sich besonders gute Schalldämmwerte ergeben, wenn die Schalldämmschicht als Vlies und insbesondere als Kunststoffvlies vorzugsweise aus Polypropylen besteht. Das Flächengewicht sollte dabei größer als 50 g/m² sein und insbesondere zwischen 100 g/m² und 500g/m² sein. Bei Materialien mit Flächengewichten zwischen 100 g/m² und 150 g/m² lag die Trittschallminderung zwischen 18 dB bis 22 dB. Demgegenüber war das Gehschallgeräusch bei dünnen Laminatböden ohne Schalldämmschicht um mehr als 3 dB, zum Teil sogar bis zu 10 dB höher als bei entsprechenden Böden mit der erfindungsgemäßen Flächenheizung. Im übrigen kann es sich bei der Schalldämmschicht um eine Schwerfolie handeln. Ein Ausführungsbeispiel sieht vor, eine Schwerfolie mit einem Flächengewicht von ca. 6 kg/m² aus 85 Gew.-% Bariumsulfat und 15 Gew.-% Bindemittel einzusetzen. Gegebenenfalls kann eine weitere Schalldämmschicht vorgesehen sein, beispielsweise ein vernetzter Polyethylen-Schaum mit einer Dicke von ca. 1 mm und einer Dichte von ca. 90 kg/m³.

Als Material für die erste und/oder die zweite Schicht eignet sich insbesondere die Verwendung von Kunststoffen, vorzugsweise von Polyolefinen, Polyester, Polyurethan und PVC. Besonders bevorzugt sind Polyethylen oder Polypropylen. Es versteht sich, daß die verwendeten Kunststoffe Zuschlagstoffe wie Stabilisatoren, Metalldesaktivatoren, Vernetzungsmittel, Farbmittel, Füllstoffe, Verstärkungsstoffe und dergleichen aufweisen können.

Die erste Schicht und/oder die zweite Schicht können als Wärmedämmschicht ausgebildet sein oder mit wenigstens einer Wärmedämmschicht verbunden sein.

Die Wärmedämmschicht kann aus Polyurethan, Polyisocyanurat, expandiertem Polystyrol, geschäumtem Polystryrol, Mineralwolle, Glaswolle, Hanf, Schafwolle oder (Recycling-)Zellulose-Platten bestehen. In diesem Zusammenhang ist es möglich, die Wärmedämmschicht nachträglich durch Kaschieren mit einem Klebstoff aufzubringen, Darüber hinaus kann eine Extrusionsbeschichtung z.B. beim Herstellen der ersten Schicht vorgesehen sein. Im übrigen ist es möglich, die erste Schicht und/oder die zweite Schicht reaktiv oder physikalisch bei der Herstellung der Dämmschicht anzubinden, z.B. bei Verfestigung/Verbindung eines Faser-/Flockengemisches unter Verwendung von Harzen, oder bei der physikalischen Schäumung von expandiertem oder geschäumtem Polystyrol oder bei der reaktiven Schäumung von Polyurethan oder Polyisocyanurat. Die Wärmedämmschicht kann je nach Beschaffenheit als weitere isolierende bzw. wasserdichte Schicht dienen oder auch als Schalldämmschicht. Vorzugsweise kann die Wärmedämmschicht eine Dicke von 5 mm bis größer als 100 mm aufweisen, insbesondere von 20 mm. Ein Ausführungsbeispiel sieht vor, daß während der Herstellung eines an sich bekannten Polyurethan-Bandschaums aus Diisocyanat, Polyol und Penthan als Wärmedämmschicht eine Flächenheizeinrichtung mit einer elektrisch leitfähigen Schicht, einer ersten Schicht und elektrischen Zuleitungen zugeführt wird, so daß die elektrisch leitende Schicht zum Schaum hin ausgerichtet ist. Dabei kann das Reaktionsgemisch auf die Flächenheizeinrichtung gegossen werden oder diese bildet die obere Begrenzung, gegen die geschäumt wird. Der Bandschaum als solcher kann auch selbst die erste Schicht bilden. Im übrigen ist es möglich, die elektrisch leitfähige Schicht, die erste Schicht und die elektrischen Zuleitungen mit einem Vakuumdämmungselement zu verkleben.

Bei einer alternativen Ausführungsform kann vorgesehen sein, daß die erste Schicht und/oder die zweite Schicht aus Beton bestehen oder daß die erste Schicht und/oder die zweite Schicht mit einer Betonschicht verbunden sind. Hier kann vorgesehen sein, die Flächenheizeinrichtung in eine Schalung einzulegen, beispielsweise vor Ort oder bei der Herstellung von Fertigelementen im Werk. Ein Ausführungsbeispiel sieht vor, daß vor Ort eine Schalung für die Erstellung einer Betonwand aufgebaut wird, wobei die Flächenheizeinrichtung mit einer elektrisch leitfähigen Schicht, einer ersten Schicht und elektrischen Zuleitungen in der Schalung auf der späteren Sichtseite befestigt wird, so daß die elektrisch leitfähige Schicht zum Beton hin ausgerichtet ist. Anschließend wird die Schalung in an sich bekannter Weise mit Beton ausgegossen.

Da es sich bei der Flächenheizung letztlich um eine Massenware handelt, bietet es sich aus herstellungstechnischen Gründen an, die Flächenheizung als Bahnenware herzustellen. Insbesondere in diesem Zusammenhang kann dann vorgesehen sein, daß die erste Schicht und die zweite Schicht an den beiden gegenüberliegenden Seiten, d.h. den Längsrändern, randseitig flüssigkeitsdicht und insbesondere dampfdicht miteinander verbunden sind, so daß sich ein insgesamt isolierter und flüssigkeitsdichter Flächenverbund mehrerer miteinander verbundener Bahnen ergibt. Zur Erzielung eines derartigen Flächenverbundes können mehrere Möglichkeiten vorgesehen sein. Bei einer Alternative ist es vorgesehen, daß die Breite der elektrisch leitfähigen Schicht geringer ist als die jeweilige Breite der ersten und der zweiten Schicht, so daß sich letztlich auf beiden Seiten ein Überstand ergibt, über den die beiden Schichten dicht miteinander verbunden werden können. Der sich in diesem Zusammenhang ergebende Rand sollte an beiden Seiten eine solche Länge haben, daß im verlegten Zustand eine flüssigkeitsdichte, insbesondere dampfdichte Verbindung mit einem Rand einer benachbarten Flächenheizung möglich ist. Um eine sichere Verbindung zu gewährleisten, sollte der Rand dabei auf jeder Seite größer als 1 cm sein. Eine Länge von mehr als 5 cm ist technisch nicht mehr notwendig. Bei einer anderen Alternative kann vorgesehen sein, die einzelnen Bahnen auf Stoß zu legen, so daß die Randkanten etwa aneinander stoßen. Anschließend kann dann ein Dichtband aufgebracht, insbesondere aufgeschweißt oder aufgeklebt werden. Grundsätzlich ist es auch möglich, die einzelnen Bahnen im Randbereich zu überlappen und dabei miteinander zu verbinden.

Im übrigen ergeben sich durch Ausbildung der Flächenheizung als Bahnenware weitere Vorteile. Die erfindungsgemäße Flächenheizung kann an die örtlichen Einbaugegebenheiten sehr leicht angepaßt werden. Die jeweiligen Bahnen können beliebig gekürzt und, sofern erforderlich, entsprechend aus- oder eingeschnitten werden. Auch ist eine Anpassung an ungleichmäßige Untergründe aufgrund des verwendeten Schichtmaterials ohne weiteres möglich. Damit bietet die erfindungsgemäße Flächenheizung ein enormes Maß an Flexibilität. Darüber hinaus bietet Bahnenware den Vorteil der Aufrollbarkeit, was den Transport, die Lagerung und auch die Handhabung erheblich vereinfacht.

Da die erfindungsgemäße Flächenheizung vorzugsweise als Bahnenware hergestellt wird, ist es vorteilhaft, wenn die ersten Schicht und auch die zweite Schicht als auf die elektrisch leitfähige Schicht aufgebrachte Beschichtung mit einem Flächengewicht zwischen 20g/m² und 1000g/m², vorzugsweise zwischen 50g/m² und 250g/m² ausgebildet sind. Es versteht sich natürlich, daß es Grundsätzlich auch möglich ist, die erste und/oder die zweite Schicht als Folienbahn auszubilden. Das aus der ersten und der zweiten Schicht sowie der elektrisch leitfähigen Schicht mit den Zuleitungen bestehende Verbundmaterial hat hierdurch eine ausgesprochen geringe Aufbauhöhe, was enorme Einbauvorteile nicht nur bei Neubauten bietet. Auch läßt sich die erfindungsgemäße Flächenheizeinrichtung ohne weiteres nachträglich, beispielsweise bei einer Renovierung, insbesondere bei Altbauten, vorsehen, was gerade wegen der geringen Aufbauhöhe gut möglich ist.

Um die elektrische Sicherheit, Langlebigkeit und gegebenenfalls auch die Haftgrundwirkung der erfindungsgemäßen Flächenheizeinhchtung zu verbessern, kann es sich für bestimmte Anwendungsfälle anbieten, die isolierenden Schichtbereiche mehrschichtig auszubilden, zum Beispiel durch Koextrusion, das heißt auf die erste Schicht und/oder die zweite Schicht zumindest eine weitere isolierende Schicht aufzubringen.

Im übrigen bietet es sich an, die Schalldämmschicht auf der Boden zugewandten Seite der Flächenheizeinrichtung anzuordnen, so daß die Schalldämmschicht auf dem Estrich aufliegt. Diese Anordnung der Schalldämmschicht bietet sich deshalb an, da hierdurch die Wärmeleitung von der elektrisch leitfähigen Schicht zum Bodenbelag nicht beeinträchtigt wird. Ein weiterer Vorteil dieser Anordnung liegt darin, daß im Verlegezustand die Schalldämmschicht aufgrund ihrer Eigenelastizität die elektrisch leitfähige Schicht gegen die Unterseite der Bodenbelagsschicht drückt, was einen guten Wärmeübergang begünstigt.

Um gute Heizeigenschaften und darüber hinaus eine gute Verbindung mit der ersten und zweiten Schicht zu erhalten, sollte die elektrisch leitfähige Schicht über die zu beheizende Fläche leitfähige Fasern, wie z. B. Kohlefasern, enthalten und insbesondere vliesartig ausgebildet sein. Im übrigen bietet die Verwendung einer elektrisch leitfähigen Schicht den wesentlichen Vorteil, daß Perforationen, Einschnitte und dergleichen nicht zu einem Ausfall der Funktion der Flächenheizeinrichtung führen. Wirtschaftlich und gegebenenfalls zur Anpassung der Leitfähigkeit vorteilhaft ist die Verwendung eines Gemisches mit Glasfasern und/oder anderen Fasern. Besonders zwecksmäßig ist es dabei, wenn die elektrisch leitfähige Schicht zwischen 50% und 90% Glasfasern und 10% bis 50% Kohlefasern aufweist. Das Flächengewicht der elektrisch leitfähigen Schicht sollte zwischen 5g/m² und 150 g/m² und insbesondere zwischen 10 g/m² und 40 g/m² liegen, also geringer sein als das Flächengewicht der ersten und der zweiten Schicht, was zu der sehr geringen Bauhöhe der erfindungsgemäßen Flächenheizung beiträgt.

Zur Vermeidung von Delamination oder Ablösung vom Untergrund kann die elektrisch leitfähige Schicht eine Mehrzahl von vorzugsweise regelmäßig angeordneten Öffnungen aufweisen, wobei, vorzugsweise, der Flächenanteil der Öffnungen an der Grundfläche der elektrisch leitfähigen Schicht zwischen 5% bis 20%, insbesondere ca. 10%, betragen kann. Durch die offenen Bereiche in der elektrisch leitfähigen Schicht kann eine Einbettung der ersten Schicht und/oder der zweiten Schicht in die offenen Bereiche bei der Herstellung der erfindungsgemäßen Flächenheizeinrichtung erreicht werden, wobei die Öffnungen insbesondere durchgängig sein können, was das Durchdringen der leitfähigen Schicht von beiden Seiten zuläßt. Bei einem Ausführungsbeispiel ist vorgesehen, daß in die elektrisch leitfähige Schicht in regelmäßigen Abständen Löcher mit einem Durchmesser von 2 mm bis 6 mm, vorzugsweise von 4 mm, gestanzt werden, so daß der verbleibende nicht perforierte Flächenanteil wenigstens 80%, vorzugsweise ca. 90% beträgt.

Beispielsweise kann die elektrisch leitfähige Schicht durch physikalische Vakuumabscheidung von Metall oder einer Metallegierung auf der ersten Schicht erhalten werden, wobei es sich bei der ersten Schicht um eine Folie, ein Vlies oder ein Gewebe handeln kann. Darüber hinaus können Graphitfolien als elektrisch leitfähige Schichten verwendet werden oder die elektrisch leitfähige Schicht wird durch Beschichtung der ersten Schicht mit Graphit und einem Bindemittel erhalten. In diesem Zusammenhang kann an der Stelle von Graphit auch Leitruß eingesetzt werden. Bei der ersten Schicht handelt es sich vorzugsweise um einen Vliesträger. Bei einem Ausführungsbeispiel zur physikalischen Vakuumabscheidung von Metallen auf einer Folie ist vorgesehen, eine Polyesterfolie mit einer Dicke von ca. 50 µm mit Titanpartikeln mit einer Größe von ca. 300 nm zu besputtern.

Da die elektrisch leitfähige Schicht in der Regel relativ dünn ist und kaum Zugkräfte aufnehmen kann, kann vorgesehen sein, daß die elektrisch leitfähige Schicht wenigstens eine weitere Schicht aufweist, die zum Beispiel die Funktion einer Trägerschicht hat. Die weitere Schicht muß nicht notwendigerweise elektrisch leitfähig sein. Die elektrisch leitfähige Schicht als solche kann also selbst als ein mehrere Schichten aufweisendes Schichtmaterial ausgebildet sein.

Statt oder zusätzlich zu der vorgenannten weiteren Schicht kann eine insbesondere gitterartige Verstärkungsschicht an der Flächenheizeinrichtung vorgesehen sein. Im Schichtenverbund der Flächenheizeinrichtung kann diese Verstärkungsschicht grundsätzlich an jeder Stelle vorgesehen sein. Diese Schicht dient im wesentlichen zur Aufnahme von Zugkräften zum Schutz der elektrisch leitfähigen Schicht. Ein weiterer Vorteil dieser Schicht liegt darin, daß sie zur Verbesserung einer Planlage der Flächenheizeinrichtung dient.

Insbesondere wenn die elektrisch leitfähige Schicht als Vlies ausgebildet ist, bietet es sich an, die erste und auch die zweite Schicht durch Extrusionsbeschichtung auf die elektrisch leitende Schicht aufzubringen, Hierdurch ergibt sich nicht nur eine sichere flächige Verbindung zur elektrisch leitfähigen Schicht. Gleichzeitig werden auch die elektrischen Zuleitungen auf der elektrisch leitfähigen Schicht fixiert. Bei der Erfindung ist es also nicht erforderlich, die Zuleitungen noch in sonstiger Weise an der elektrisch leitfähigen Schicht zu befestigen, beispielsweise über eine zusätzliche Klebverbindung.

Damit sich eine besonders gute Fixierung der Zuleitungen auf der elektrisch leitfähigen Schicht über die Extrusionsbeschichtung ergibt, sollten die Zuleitungen nicht unmittelbar an den Randkanten bzw. Längsrändern der elektrisch leitfähigen Schicht angeordnet sein, sondern in einem vorgegebenen Abstand, so daß sich in diesem Bereich noch eine Verbindung zwischen dem extrudierten Material und der elektrisch leitfähigen Schicht ergeben kann. Um zu einer sicheren Verbindung zu kommen, sollte der Abstand größer als 2 mm sein.

Im übrigen ist es im Hinblick auf die elektrische Anbindung so, daß zwei parallel laufende Zuleitungen vorgesehen sind, die voneinander beabstandet jeweils im Bereich eines Längsrandes der elektrisch leitfähigen Schicht mit dem vorgenannten, vorgegebenen Abstand zur Längskante angeordnet sind. Die Zuleitungen sollten aus gut leitfähigem Material wie z. B. Kupfer oder einer Kupferlegierung bestehen, um eine gleichmäßige Erwärmung der Heizung zu gewährleisten. Um eine möglichst geringe Dicke bei separat aufzubringenden Zuleitungen zu haben, bietet es sich an, die Zuleitungen bandförmig auszubilden und im übrigen in Form eines Geflechts. Ein Geflecht hat den wesentlichen Vorteil, daß Längenänderungen während des Betriebes ohne weiteres möglich sind und die Heizung besonders flexibel ist.

Grundsätzlich ist es auch möglich, in die elektrisch leitfähige Schicht, wenn diese faser- oder vliesartig ausgebildet ist, die elektrischen Zuleitungen mit einzuarbeiten. In diesem Falle sind in beiden seitlichen Randbereichen der Schichtbahn Fasern aus einem Material mit erhöhter Leitfähigkeit gegenüber der Leitfähigkeit der leitfähigen Schicht eingebracht. Hierbei könnten beispielsweise Kupferfasern vorgesehen sein. Durch die Menge bzw. Konzentration der dort vorgesehenen Fasern erhöhter elektrischer Leitfähigkeit lassen sich längslaufende Zuleitungen innerhalb des elektrisch leitfähigen Vlieses oder Fasermaterials realisieren. Dem vorstehenden Merkmal kommt im übrigen eine eigenerfinderische Bedeutung zu.

Im übrigen kann es sich bei einem vlies- oder faserartigen Material anbieten, wenn in dem zu beheizenden Bereich bei Bahnenware elektrisch leitfähige Fasern nicht vollflächig vorgesehen sind, sondern nur abschnittsweise querlaufende elektrisch leitfähige Fasern vorgesehen sind. Der Abstand benachbarter elektrisch leitender Faserbereiche hängt wiederum von dem jeweiligen Anwendungsfall ab. Die Faserbereiche zwischen benachbarten leitfähigen Faserbereichen sind elektrisch nicht leitend. Eine derartige Anordnung ist relativ kostengünstig, da das vergleichsweise teurere elektrisch leitfähige Fasermaterial nicht vollflächig eingesetzt wird.

Weiterhin ist es möglich, die elektrisch leitfähige Schicht gewebe- oder gelegeartig auszubilden, In diesem Falle sind dann jedenfalls eine Vielzahl von querlaufenden Schußfäden aus elektrisch leitfähigem Material vorgesehen. Es versteht sich, daß neben den elektrisch leitfähigen Schußfäden auch nichtleitende Schußfäden vorgesehen sein können. Der Abstand der elektrisch leitfähigen Schußfäden voneinander richtet sich nach dem jeweiligen Anwendungsfall. Bei Anwendung im Bodenbereich ist eine möglichst gleichmäßige Wärmeverteilung auf dem jeweiligen Belag erwünscht, während es bei der Anwendung im Wand- oder Deckenbereich auf eine sehr gleichmäßige Wärmeverteilung nicht entscheidend ankommt. Die Schußfäden können jeweils im seitlichen Randbereich durch separat aufzubringende elektrische Zuleitungen kontaktiert werden. Besonders vorteilhaft ist es jedoch, im jeweiligen Randbereich elektrisch leitfähige Randkettfäden vorzusehen, die die elektrisch leitfähigen Schußfäden kontaktieren. Die übrigen längslaufenden Kettfäden sind nicht elektrisch leitend.

Grundsätzlich ist es möglich, zusätzlich zu der elektrisch leitfähigen Schicht wenigstens eine weitere elektrisch leitfähige Schicht vorzusehen, die von der vorgenannten leitfähigen Schicht elektrisch isoliert ist. Diese weitere leitfähige Schicht ist mit den elektrischen Zuleitungen nicht verbunden, sondern gegebenenfalls geerdet, so daß sich eine Schutzfunktion vor Abstrahlung elektrischer oder elektromagnetischer Felder ergibt.

Grundsätzlich kann es sich sogar anbieten, die erfindungsgemäße Flächenheizeinrichtung selbst als Bodenbelag auszubilden. In diesem Falle sollte dann die äußerste, raumzugewandte Schicht ein dickes und widerstandsfähiges Belagsmaterial bzw. ein begehbarer Belag sein. In diesem Fall könnte sich im übrigen anbieten, auf der raumseitigen Außenseite der äußersten Schicht eine Strukturierung und/oder eine dekorative Kaschierung oder Beschichtung aufzubringen. Im übrigen könnte als äußere Schicht auch ein Teppichboden vorgesehen sein, der dann einteilig mit der erfindungsgemäßen Heizeinrichtung ausgebildet ist.

Je nach Anwendungsfall kann es sich anbieten, die Flächenheizeinrichtung mit dem darauf aufzulegenden Belag und/oder mit dem Untergrund zu verbinden. Hierzu kann dann die raumzugewandte bzw. bodenzugewandte Außenseite der Flächenheizeinrichtung entweder mit einer Kleb- oder Haftvermittlungsschicht versehen sein oder aber aus einem vliesartigen, faserigen oder porösen Material bestehen und/oder Hinterschneidungen und/oder Vorsprünge aufweisen, damit sich eine Haftbrücke ergibt, in die beispielsweise ein Kleber gut eindringen und entsprechend gut halten kann. Allerdings ist es grundsätzlich auch möglich, an der raumseitigen Oberseite der Flächenheizeinrichtung gerade keine Verklebung mit dem darauf aufzulegenden Belag vorzusehen. Grundsätzlich ist dies auch an der bodenseitigen Unterseite möglich. Insbesondere, wenn die Schalldämmschicht aus einem Vlies besteht, kann diese Schicht nicht nur die Schalldämmfunktion übernehmen, sondern gleichzeitig auch als Haftbrücke zur unterseitigen Verbindung mit dem Untergrund dienen.

Es wird darauf hingewiesen, daß sämtliche der vorgenannten Bereichsangaben alle innerhalb des betreffenden Bereichs liegenden Werte umfassen, auch wenn diese im einzelnen nicht aufgeführt sind.

Die vorliegende Erfindung betrifft im übrigen weiterhin ein Verfahren zur Herstellung einer Flächenheizeinrichtung der eingangs genannten Art, wobei die vorstehend genannten konstruktiven Merkmale verfahrensgemäß entsprechend realisiert werden. Auf eine Wiederholung der einzelnen Merkmale wird verzichtet. Darüber hinaus betrifft die vorliegende Erfindung ein Verfahren zur Verlegung einer Flächenheizung der vorgenannten Art. Auf die einzelnen Verfahren wird im Zusammenhang mit den Ausführungsbeispielen näher eingegangen.

Ein möglicher Anwendungsbereich der erfindungsgemäßen Flächenheizeinrichtung stellt die Beheizung von Kastenrinnen insbesondere im Dachbereich dar. Im Fensterbereich kann die erfindungsgemäße Flächenheizeinrichtung zur Verhinderung der Bildung von Kondensat vorgesehen sein, wobei die Flächenheizeinrichtung unterhalb von der Fensteröffnung an der Wand oder unterhalb von der Fensterbank angeordnet sein kann. Es ist darüber hinaus möglich, die erfindungsgemäße Flächenheizeinrichtung in Form einer Verbundplatte direkt als Fensterbank einzusetzen.

Nachfolgend wird die Erfindung anhand der Zeichnung näher beschrieben. Dabei zeigt
- Fig. 1: eine schematische Querschnittsansicht einer erfindungsgemäßen Flächenheizeinrichtung,
- Fig. 2: eine Draufsicht auf einen Teil einer verlegten Flächenheizung mit mehreren Bahnen von Flächenheizeinrichtungen und
- Fig. 3: eine schematische Querschnittsansicht einer erfindungsgemäßen Flächenheizeinrichtung mit Bodenbelag.

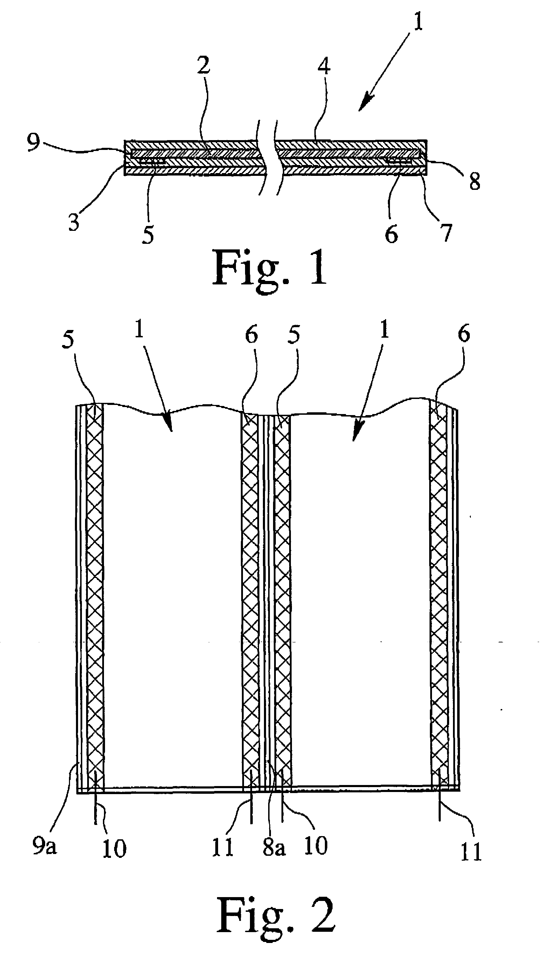

In Fig. 1 ist eine Flächenheizeinrichtung 1 im Bodenbereich schematisch dargestellt. Die Flächenheizeinrichtung 1 weist eine elektrisch leitfähige Schicht 2 und eine Mehrzahl weiterer Schichten auf. Unmittelbar benachbart der elektrisch leitfähigen Schicht 2 ist eine weitere, erste Schicht 3, die an der Unterseite der elektrisch leitfähigen Schicht 2 vorgesehen ist. Oberseitig ist als weitere Schicht eine zweite Schicht 4 vorgesehen. Darüber hinaus weist die Flächenheizeinrichtung 1 elektrische Zuleitungen 5, 6 auf, die die Schicht 2 kontaktieren. Die elektrisch leitfähige Schicht 2 und die elektrischen Zuleitungen 5, 6 sind zwischen der ersten Schicht 3 und der zweiten Schicht 4 angeordnet.

Im Anschluß an die erste Schicht 3 befindet sich eine untere Schalldämmschicht 7. Die Schalldämmschicht 7 besteht vorliegend aus einem vernadelten Spinnvlies aus Polypropylen mit einem Flächengewicht von 120 g/m², Dem gegenüber bestehen die erste Schicht 3 und die zweite Schicht 4 aus einem elektrisch isolierenden und flüssigkeitsdichten Material. Grundsätzlich kann es sich bei diesem Material um jegliche Art von Kunststoff handeln. Im Ausführungsbeispiel handelt es sich um Polypropylen, das zusätzlich die Funktion einer Dampfsperre vorliegend mit einer Dampfdurchlässigkeit von 0,88 g/(m² x 24h) (nach DIN 52615) erfüllt.

Bei der Flächenheizeinrichtung 1 handelt es sich um ein Schichtmaterial, das, wie sich insbesondere aus Fig. 2 ergibt, als Bahnenware hergestellt wird.

Wie sich aus den Figuren ergibt, sind die erste Schicht 3 und die zweite Schicht 4 an ihren gegenüberliegenden Seiten randseitig Über eine entsprechende Verbindung 8, 9 miteinander verbunden. Die Verbindungen 8, 9 sind jeweils flüssigkeitsdicht und insbesondere dampfdicht, so daß zum einen Flüssigkeit nicht an die elektrisch leitfähige Schicht 2 gelangen kann und zum anderen ein Dampfdurchtritt durch eine verlegte Flächenheizung, wie sie in Fig. 2 dargestellt ist, nicht möglich ist.

Durch die Verbindungen 8, 9 ergibt sich an den beiden Längsseiten der Flächenheizung jeweils ein überstehender Rand 8a, 9a. Der Rand sollte dabei eine solche Länge haben, daß im verlegten Zustand eine flüssigkeitsdichte und insbesondere dampfdichte Verbindung mit einem Rand einer benachbarten Flächenheizeinrichtung 1 möglich ist. In den dargestellten Ausführungsbeispielen hat der überstehende Rand 8a, 9a eine Länge von ca. 2 cm. Bei zwei nebeneinanderliegenden Flächenheizenrichtungen 1 ergibt sich dann eine hinreichende Überlappung, um eine längslaufende und durchgehende Verbindung zwischen diesen Rändern zu erzielen.

Bei der elektrisch leitfähigen Schicht 2 handelt es sich vorliegend um ein beheizbares Vlies mit einem Flächengewicht von 20 g/m², das aus 80 % Glas- und 20 % Kohlefasern und einem Bindemittel besteht. Die Breite dieser Bahn beträgt etwa 1 m. Grundsätzlich ist es auch möglich, daß die elektrisch leitfähige Schicht eine zusätzliche, ggf. sogar nicht elektrisch leitende Trägerschicht aufweist. Die erste Schicht 3 ist durch Extrusionsbeschichtung unter. Zwischenlage der elektrischen Zuleitungen 5, 6 auf die elektrisch leitfähige Schicht 2 aufgebracht, so daß die Zuleitungen 5, 6 auf der elektrisch leitfähigen Schicht 2 und diese kontaktierend fixiert sind. Auch die zweite Schicht 4 ist durch Extrusionsbeschichtung auf die elektrisch leitfähige Schicht 2 aufgebracht. Die erste und die zweite Schicht 3, 4 haben ein Flächengewicht von etwa 100g/m² und jeweils eine Breite von etwa 1,04 m. Die Schichten 3, 4 stehen zu beiden Seiten über die elektrisch leitfähige Schicht 2 über, so daß die Verbindungen 8, 9 realisiert werden können.

Für die elektrisch leitfähige Schicht 2 sind zwei parallel laufende elektrische Zuleitungen 5, 6 vorgesehen. Jede der Zuleitungen 5, 6 ist im Bereich eines Längsrandes der elektrisch leitfähigen Schicht 2 angeordnet und zwar mit einem Abstand von etwa 0,5 cm zu den Längsrändern. Die Zuleitungen 5, 6 selbst bestehen aus Kupfer oder einer Kupferlegierung, sind bandförmig und als Geflecht ausgebildet. Die Breite der Zuleitungen 5, 6 beträgt vorliegend 5 mm.

Im dargestellten Ausführungsbeispiel hat die Schalldämmschicht 7 nicht nur eine Schalldämmfunktion, sie kann außerdem auch als Haftbrücke zum sicheren Anbinden an den Untergrund und im übrigen auch zur mechanischen Entkopplung dienen. Die mechanische Entkopplung bedeutet, daß relativ zueinander bewegliche Ebenen vorgesehen sind, also letztlich eine Längenänderung oder Verschiebung der Flächenheizeinrichtting 1 gegenüber dem Untergrund bzw. dem Belag ohne weiteres möglich ist. Diese Entkupplung ergibt sich beispielsweise dadurch, daß ein Kleber zwar hinreichend weit in die Schalldämmschicht 7 eindringt, daß sich eine feste Verbindung ergibt, daß jedoch ein hinreichend dicker faseriger Bereich verbleibt, um die mechanische Entkopplungsfunktion und auch die Schalldämmfunktion erfüllen zu können.

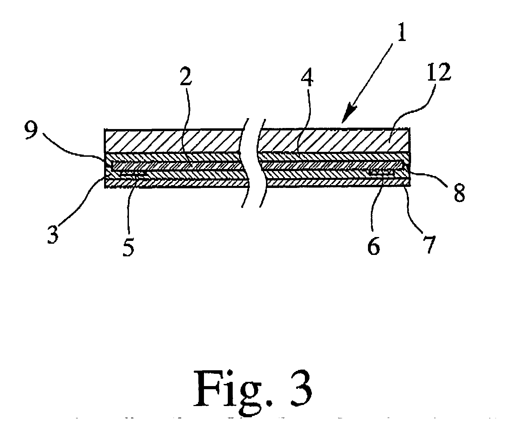

In Fig. 3 ist ein Bodenbelag 12 mit einer Flächenheizeinrichtung 1 dargestellt. Bei dem Bodenbelag kann 12 es sich beispielsweise um Parkett oder Laminat handelt. Im in Fig. 3 dargestellten Ausführungsbeispiel ist der Bodenbelag 12 bereits herstellerseitig einstückig mit der Flächenheizeinrichtung 1 ausgebildet. Die Flächenheizeinrichtung 1 ist unterseitig und insbesondere hohlraumfrei am Bodenbelag 12 vorgesehen bzw. mit diesem verbunden, so daß sich eine gute Wärmeleitung von der elektrisch leitfähigen Schicht 2 in den Belag 12 ergibt.

Die im einzelnen nicht dargestellte Herstellung der Flächenheizeinrichtung 1 läuft derart ab, daß in einem ersten Arbeitsgang die elektrisch leitfähige Schicht 2 auf der Oberseite extrusionsbeschichtet wird. Parallel dazu oder in einem zweiten Arbeitsgang wird die Unterseite der Schicht 2 extrusionsbeschichtet. Dabei läuft gleichzeitig die Schalldämmschicht 7 auf der anderen Seite der Polypropylen-Schmelze zu. Außerdem laufen zusätzlich die beiden Zuleitungen 5, 6 ein. Bei der Extrusionsbeschichtung der Unterseite der elektrisch leitfähigen Schicht 2 unter Zwischenlage der Zuleitungen 5, 6 ergibt sich eine Fixierung der Zuleitungen 5, 6 auf der elektrisch leitfähigen Schicht 2 bei gleichzeitiger Kontaktierung, ohne daß weitere Verbindungsmittel bzw. Verbindungen zwischen den Zuleitungen 5, 6 und der elektrisch leitfähigen Schicht 2 vorgesehen sind. Diese gute Verbundhaftung ergibt sich deshalb, da bei der Extrusionsbeschichtung die Schmelze der Schichten 3 und 4 in die Poren der leitfähigen Schicht 2 und der Zuleitungen 5, 6 eindringen bzw. diese zum Teil sogar durchdringen.

Die Verlegung einer Flächenheizeinrichtung 1 der vorgenannten Art erfolgt derart, daß ein Streifen der Flächenheizeinrichtung 1 von der Bahnenware für den vorgegebenen Anwendungsfall abgelängt, d.h. abgeschnitten wird. Dieser fertige Streifen wird dann mit der Schalldämmschicht 7 nach unten auf den Untergrund aufgelegt. Bedarfsweise kann der Streifen mit dem Untergrund verklebt werden. Dies ist jedoch nicht unbedingt erforderlich. Zur elektrischen Anbindung der Flächenheizeinrichtung 1 werden dann die Zuleitungen 5, 6 bereichsweise freigelegt und mit elektrischen Anschlußleitungen 11, 12 elektrisch verbunden. Anschließend werden die freigelegten Bereiche isoliert und abgedichtet.

Um eine vollständige Flächenheizung in dem betreffenden Raum vorzusehen, werden mehrere Streifen nebeneinander angeordnet. Benachbarte Streifen werden abdichtend miteinander verbunden. Außerdem werden die Streifen an ihren abgelängten Stirnseiten entsprechend abgedichtet. Dies kann ebenfalls unmittelbar über eine entsprechende Verklebung erfolgen oder aber über separat aufzubringende Abdichtelemente, die endseitig angebracht und anschließend mit dem Schichtenverbund verbunden werden.

Nach der vollständigen Verlegung der Flächenheizung wird der Bodenbelag auf die obere Schicht 4 möglichst hohlraumfrei aufgelegt. Eine zumindest im wesentlichen hohlraumfreie Anordnung ergibt sich aufgrund der Eigenflexibilität der Schalldämmschicht 7, die eine Gegenkraft zur Gewichtskraft des Bodenbelags ausübt und die Schicht 4 gegen die Unterseite des Bodenbelags drückt. Im übrigen versteht es sich, daß es grundsätzlich auch möglich ist, die Flächenheizeinrichtung 1 mit dem Bodenbelag zu verkleben. Letztlich ergibt sich nach Verlegung des Bodenbelags eine Anordnung, wie dies beispielhaft in Fig. 3 dargestellt ist.

Ist der Bodenbelag 12 einstückig mit der Flächenheizeinrichtung 1 ausgebildet, kann eine unmittelbare Verlegung der einzelnen Bodenbelagselemente auf dem Untergrund erfolgen. Zum elektrischen Anschluß der Flächenheizeinrichtung 1 kann dann jedes Bodenbelagselement oder können zu Gruppen zusammengefaßte Bodenbelagselemente elektrisch angebunden werden. Grundsätzlich ist es aber auch möglich, benachbarte Bodenbelagselemente über entsprechende Anschlußkontaktierungen beim Verlegen elektrisch miteinander zu verbinden.

## Patentansprüche

1. Flächenheizeinrichtung (1) zur Anordnung im Bodenbereich mit einer elektrisch leitfähigen Schicht (2) und mit elektrischen Zuleitungen (5, 6), wobei wenigstens eine Schalldämmschicht (7) vorgesehen ist, wobei wenigstens eine erste Schicht (3) aus einem elektrisch isolierenden Material und wenigstens eine weitere, zweite Schicht (4) aus einem elektrisch isolierenden Material vorgesehen sind und wobei die elektrisch leitfähige Schicht (2) und die elektrischen Zuleitungen (5, 6) zwischen der ersten Schicht (3) und der zweiten Schicht (4) angeordnet sind,
**dadurch gekennzeichnet,**
**daß** die Schalldämmschicht (7) integraler Bestandteil der Flächenheizeinrichtung (1) ist, daß die erste und die zweite Schicht (3, 4) aus einem flüssigkeitsdichten Material bestehen und daß der Schichtenverbund der Flächenheizeinrichtung (1) als Dampfsperre mit einer Dampfdurchlässigkeit von kleiner 10 g/(m² x 24 h) ausgebildet ist.

2. Flächenheizeinrichtung nach Anspruch 1, **dadurch gekennzeichnet, daß** die Schalldämmschicht (7) Fasermaterial, Mineralwolle, geschäumtes Material und/oder Korkmaterial aufweiset oder als Schwerfolie oder Vlies ausgebildet ist und daß, vorzugsweise, die Dicke der Schalldämmschicht (7) um ein Mehrfaches größer ist als die Dicke der elektrisch leitfähigen Schicht.

3. Flächenheizeinrichtung nach Anspruch 1 oder 2, **dadurch gekennzeichnet, daß** der Schichtenverbund der Flächenheizeinrichtung eine Dampfdurchlässigkeit von kleiner 5 g/(m² x 24 h) und insbesondere kleiner 1 g/m² x 24 h) aufweist.

4. Flächenheizeinrichtung nach einem der vorhergehenden Ansprüche, **dadurch gekennzeichnet, daß** die erste Schicht (3) und/oder die zweite Schicht (4) aus Kunststoff, vorzugsweise Polyolefinen, Polyester, Polyurethan oder PVC und insbesondere aus Polyethylen oder Polypropylen bestehen und/oder daß die erste Schicht (3) und/oder die zweite Schicht (4) als Wärmedämmschicht ausgebildet sind und aus Polyurethan, Polyisocyanurat, expandiertem Polystyrol, geschäumtem Polystryrol, Mineralwolle, Glaswolle, Hanf, Schafwolle oder (Recycling)Zellulose-Platten bestehen oder daß die erste Schicht (3) und/oder die zweite Schicht (4) mit wenigstens einer Wärmedämmschicht aus Polyurethan, Polyisocyanurat, expandiertem Polystyrol, geschäumtem Polystryrol, Mineralwolle, Glaswolle, Hanf, Schafwolle oder (Recycling-)Zellulose-Platten verbunden sind,

5. Flächenheizeinrichtung nach einem der vorhergehenden Ansprüche, **dadurch gekennzeichnet, daß** die erste Schicht (3) und/oder die zweite Schicht (4) aus Beton bestehen oder daß die erste Schicht (3) und/oder die zweite Schicht (4) mit einer Betonschicht verbunden sind.

6. Flächenheizeinrichtung nach einem der vorhergehenden Ansprüche, **dadurch gekennzeichnet, daß** die erste Schicht (3) und die zweite Schicht (4) an zumindest zwei gegenüberliegenden Seiten randseitig flüssigkeitsdicht, insbesondere dampfdicht miteinander verbunden sind.

7. Flächenheizeinrichtung nach einem der vorhergehenden Ansprüche, **dadurch gekennzeichnet, daß** auf die erste Schicht (3) und/oder die zweite Schicht (4) wenigstens einer weitere elektrisch isolierende und flüssigkeitsdichte Schicht aufgebracht ist.

8. Flächenheizeinrichtung nach einem der vorhergehenden Ansprüche, **dadurch gekennzeichnet, daß** die elektrisch leitfähige Schicht (2) eine Mehrzahl von vorzugsweise regelmäßig angeordneten Öffnungen aufweist, wobei, vorzugsweise, der Flächenanteil der Öffnungen an der Grundfläche der elektrisch leitfähigen Schicht (2) zwischen 5% bis 20%, insbesondere ca. 10%, beträgt.

9. Flächenheizeinrichtung insbesondere nach einem der vorhergehenden Ansprüche, **dadurch gekennzeichnet, daß** im Randbereich der elektrisch leitfähigen Schicht (2) längslaufende Faserbereiche mit Fasern erhöhter elektrischer Leitfähigkeit zur Bildung der Zuleitungen vorgesehen sind.

10. Flächenheizeinrichtung insbesondere nach einem der vorhergehenden Ansprüche, **dadurch gekennzeichnet, daß** die elektrisch leitfähige Schicht gewebe- und gelegeartig ausgebildet ist, daß eine Vielzahl von elektrisch leitfähigen Schußfäden vorgesehen sind und daß, insbesondere, jeweils im Randbereich wenigstens ein, vorzugsweise eine Mehrzahl von elektrisch leitfähigen Randkettfäden vorgesehen sind.

11. Flächenheizeinrichtung nach einem der vorangehenden Ansprüche, **dadurch gekennzeichnet, daß** eine insbesondere gitterartige Verstärkungsschicht zur Verbesserung einer Planlage der Flächenheizeinrichtung (1) und/oder zur Aufnahme von Zugkräften zum Schutz der elektrisch leitfähigen Schicht (2) vorgesehen ist.

12. Flächenheizeinrichtung nach einem der vorangehenden Ansprüche, **dadurch gekennzeichnet, daß** die erste Schicht (3) durch Extrusionsbeschichtung unter Zwischenlage der elektrischen Zuleitungen (5, 6) auf die elektrisch leitende Schicht (2) aufgebracht ist, so daß die Zuleitungen (5, 6) auf der elektrisch leitenden Schicht (2) fixiert sind und/oder daß die zweite Schicht (4) durch Extrusionsbeschichtung auf die elektrisch leitfähige Schicht (2) aufgebracht ist.

13. Flächenheizeinrichtung nach einem der vorhergehenden Ansprüche, **dadurch gekennzeichnet, daß** auf der raumseitigen Außenseite der Flächenheizeinrichtung (1) eine Strukturierung und/oder eine dekorative Kaschierung oder Beschichtung und/oder ein begehbarer Belag aufgebracht ist.

14. Flächenheizeinrichtung nach einem der vorhergehenden Ansprüche, **dadurch gekennzeichnet, daß** die Schalldämmschicht (7) auf der bodenzugewandten Seite angeordnet ist.

15. Flächenheizeinrichtung nach einem der voranstehenden Ansprüche, **dadurch gekennzeichnet, daß** eine Entkopplung innerhalb wenigstens einer Schicht (3, 4, 7) oder zwischen zwei benachbarten Schichten vorgesehen ist.

16. Bodenbelag, insbesondere Parkett oder Laminat, mit wenigstens einer Flächenheizeinrichtung nach einem der vorhergehenden Ansprüche.

17. Bodenbelag nach Anspruch 16, **dadurch gekennzeichnet, daß** die Flächenheizeinrichtung (1) hohlraumfrei an der Unterseite des Bodenbelags befestigt ist.

## Claims

1. Panel heating device (1) for arrangement in the area of floors, with an electrically conductive layer (2) and with electrical supply lines (5, 6), wherein at least one acoustically insulating layer (7) is provided, wherein at least one first layer (3) made of an electrically insulating material and at least a further second layer (4) made of an electrically insulating material is provided and wherein the electrically conductive layer (2) and the electrical supply lines (5, 6) are disposed between the first layer (3) and the second layer (4), **characterized in that** the acoustically insulating layer (7) is integral part of the panel heating device (1), that the first and second layer (3, 4) consist of a liquid-tight material and that the layered composite of the panel heating device (1) is designed as a vapor seal with a vapor permeability of less than 10 g/(m² x 24h).

2. Panel heating device as set forth in claim 1, **characterized in that** the acoustically insulating layer (7) has fiber material mineral wool, foamed material and/or cork material or is formed as a heavy foil or non-woven and that, preferably, the thickness of the acoustically insulating layer (7) is several times greater than the thickness of the electrically conductive layer.

3. Panel heating device as set forth in claim 1 or 2, **characterized in that** the layered composite of the panel heating device (1) comprises a vapor permeability of less than 5 g/(m² x 24h) and particulary less than 1 g/(m² x 24h).

4. Panel heating device as set forth in one of the foregoing claims, **characterized in that** the first layer (3) and/or the second layer (4) consist of plastic, preferably polyolefins, polyester, polyurethane or PVC and particularly of polyethylene or polypropylene and/or that the first layer (3) and/or the second layer (4) are designed as a heat-insulating layer and consist of polyurethane, polyisocyanurate, expanded polystyrene, foamed polystyrene, mineral wool, fiberglass, hemp, sheep's wool or (recycled) cellulose plates or that the first layer (3) and/or the second layer (4) are joined to at least one heat-insulating layer made of polyurethane, polyisocyanurate, expanded polystyrene, foamed polystyrene, mineral wool, fiberglass, hemp, sheep's wool or (recycled) cellulose plates.

5. Panel heating device as set forth in one of the foregoing claims, **characterized in that** the first layer (3) and/or the second layer (4) consist of concrete or that the first layer (3) and/or the second layer (4) are joined to a concrete layer.

6. Panel heating device as set forth in in one of the foregoing claims, **characterized in that** the first layer (3) and the second layer (4) are joined on at least two opposing sides on the edge in a liquid-tight, particularly vapor-tight, manner.

7. Panel heating device as set forth in one of the foregoing claims, **characterized in that** at least one other electrical insulating and liquid-tight layer is applied to the first layer (3) and/or the second layer (4).

8. Panel heating device as set forth in one of the foregoing claims, **characterized in that** the electrically conductive layer (2) has a plurality of preferably regularly arranged openings wherein, preferably, the surface area proportion of the openings on the base surface of the electrically conductive layer (2) is between 5% and 20%, particularly approx. 10%.

9. Panel heating device as set forth in one of the foregoing claims, **characterized in that** longitudinally running fiber areas with fibers having an elevated conductivity are provided to form the supply lines in the edge area of the electrically conductive layer (2).

10. Panel heating device as set forth in one of the foregoing claims, **characterized in that** the electrically conductive layer is designed in the manner of a weave or a clutch, that a plurality of transversely running weft threads are provided and that at least one electrically conductive edge warp thread, preferably a plurality of them, is provided.

11. Panel heating device as set forth in one of the foregoing claims, **characterized in that** a particularly lattice-like reinforcement layer is provided to improve the flatness of the panel heating device (1) and/or to withstand tensile forces in order to protect the electrically conductive layer (2),

12. Panel heating device as set forth in one of the foregoing claims, **characterized in that** the first layer (3) is applied by means of extrusion coating with interposition of the electrical supply lines (5, 6) onto the electrically conductive layer (2) such that the supply lines (5, 6) are affixed onto the electrically conductive layer (2) and/or that the second layer (4) is applied by means of extrusion coating onto the electrically conductive layer (2).

13. Panel heating device as set forth in one of the foregoing claims, **characterized in that** a structuring and/or a decorative lamination or coating and/or a covering that can be walked on is applied on the outer side of the panel heating device (1) facing the room.

14. Panel heating device as set forth in one of the foregoing claims, **characterized in that** the acoustically insulating layer (7) is disposed on the side facing the floor.

15. Panel heating device as set forth in one of the foregoing claims, **characterized in that** a decoupling within at least one layer (3, 4, 7) or between two neighboring layers is provided for.

16. Floor covering, particularly parquet or laminate, with at least one panel heating device as set forth in one of the foregoing claims.

17. Floor covering as set forth in claim 16, **characterized in that** the panel heating device (1) is attached in a manner free of hollow space to the underside of the floor covering.

## Revendications

1. Dispositif de chauffage par le sol (1) destiné à être installé dans le sol, comportant une couche (2) électroconductrice et des lignes d'alimentation (5, 6) électriques, sachant qu'il est prévu au moins une couche d'isolation phonique (7), qu'il est prévu au moins une première couche (3) en matériau isolant électrique et au moins une deuxième couche (4) en matériau isolant électrique et dans lequel la couche (2) électroconductrice et les lignes d'alimentation (5, 6) électriques sont disposées entre la première couche (3) et la deuxième couche (4),
caractérisè
en ce que la couche d'isolation phonique (7) est une partie intégrante du dispositif de chauffage par le sol (1), en ce que la première et la deuxième couche (3, 4) sont réalisées dans un matériau étanche aux liquides, et en ce que l'ensemble de couches du dispositif de chauffage par le sol (1) est réalisé sous la forme d'une barrière pare-vapeur avec une perméabilité à la vapeur inférieure à 10 g(m² x 24 h),

2. Dispositif de chauffage par le sol selon la revendication 1, **caractérisé en ce que** la couche d'isolation phonique (7) comporte un matériau fibreux, de la laine minérale, un matériau alvéolaire et/ou un matériau en liège ou est réalisée sous forme de film lourd ou de non-tissé, et **en ce que**, de préférence, l'épaisseur de la couche d'isolation phonique (7) est égale à un multiple de l'épaisseur de la couche électroconductrice.

3. Dispositif de chauffage par le sol selon la revendication 1 ou 2, **caractérisé en ce que** l'ensemble de couches du dispositif de chauffage par le sol (1) possède une perméabilité à la vapeur inférieure à 5 g(m² x 24 h), et en particulier inférieure à 1 g(m² x 24 h).

4. Dispositif de chauffage par le sol selon l'une quelconque des revendications précédentes, **caractérisé en ce que** la première couche (3) et/ou la deuxième couche (4) sont réalisées en matière plastique, de préférence en polyoléfine, polyester, polyuréthanne ou PVC et, en particulier, en polyéthylène ou polypropylène, et/ou **en ce que** la première couche (3) et/ou la deuxième couche (4) sont réalisées sous forme de couches d'isolation thermique et sont réalisées en polyuréthanne, polyisocyanurate, polystyrène expansé, polystyrène alvéolaire, laine minérale, laine de verre, chanvre, laine de mouton ou panneaux de cellulose (recyclée), ou **en ce que** la première couche (3) et/ou la deuxième couche (4) sont assemblées à au moins une couche d'isolation thermique en polyuréthanne, polyisocyanurate, polystyrène expansé, polystyrène alvéolaire, laine minérale, laine de verre, chanvre, laine de mouton ou panneaux de cellulose (recyclée).

5. Dispositif de chauffage par le sol selon l'une quelconque des revendications précédentes, **caractérisé en ce que** la première couche (3) et/ou la deuxième couche (4) sont réalisées en béton ou **en ce que** la première couche (3) et/ou la deuxième couche (4) sont assemblées à une couche en béton.

6. Dispositif de chauffage par le sol selon l'une quelconque des revendications précédentes, **caractérisé en ce que** la première couche (3) et/ou la deuxième couche (4) sont assemblées l'une à l'autre au moins sur deux bords opposés, le long du bord, de manière étanche aux liquides, en particulier de manière étanche à la vapeur.

7. Dispositif de chauffage par le sol selon l'une quelconque des revendications précédentes, **caractérisé en ce que** sur la première couche (3) et/ou la deuxième couche (4) est déposée au moins une couche supplémentaire électro-isolante et étanche aux liquides.

8. Dispositif de chauffage par le sol selon l'une quelconque des revendications précédentes, **caractérisé en ce que** la couche (2) électroconductrice comporte une pluralité d'orifices disposés de préférence uniformément, sachant que, de préférence, la surface occupée par les orifices sur la surface de base de la couche (2) électroconductrice se situe entre 5 % à 20 %, en particulier environ 10 %,

9. Dispositif de chauffage par le sol en particulier selon l'une quelconque des revendications précédentes, **caractérisé en ce que** dans la zone de bordure de la couche (2) électroconductrice sont prévues des zones longitudinales avec des fibres à conductivité électrique accrue pour former les lignes d'alimentation.

10. Dispositif de chauffage par le sol en particulier selon l'une quelconque des revendications précédentes, **caractérisé en ce que** la couche électroconductrice est réalisée sous forme de tissu ou de mat, **en ce qu'**il est prévu une pluralité de fils de trame électroconducteurs et **en ce que**, en particulier, il est prévu dans chaque zone de bordure au moins un, de préférence une pluralité de fils de chaîne de bord électroconducteurs.

11. Dispositif de chauffage par le sol selon l'une quelconque des revendications précédentes, **caractérisé en ce qu'**une couche de renfort en particulier en forme de grille est prévue pour améliorer la pose plane du dispositif de chauffage par le sol (1) et/ou pour absorber les forces de traction en vue de protéger la couche (2) électroconductrice.

12. Dispositif de chauffage par le sol selon l'une quelconque des revendications précédentes, **caractérisé en ce que** la première couche (3) est déposée par extrusion, moyennant la pose intercalée des lignes d'alimentation électriques (5, 6), sur la couche (2) électroconductrice, de telle sorte que les lignes d'alimentation (5, 6) sont fixées sur la couche (2) électroconductrice, et/ou **en ce que** la deuxième couche (4) est déposée par extrusion sur la couche (2) électroconductrice.

13. Dispositif de chauffage par le sol selon l'une quelconque des revendications précédentes, **caractérisé en ce que** sur la face extérieure, orientée vers la pièce, du dispositif de chauffage par le sol (1) est déposée une structuration et/ou un placage décoratif ou revêtement décoratif et/ou un revêtement sur lequel il est possible de marcher.

14. Dispositif de chauffage par le sol selon l'une quelconque des revendications précédentes, **caractérisé en ce que** la couche d'isolation phonique (7) est disposée sur le côté orienté vers le sol.

15. Dispositif de chauffage par le sol selon l'une quelconque des revendications précédentes, **caractérisé en ce qu'**il est prévu un découplage à l'intérieur d'au moins une couche (3, 4, 7) ou entre deux couches adjacentes.

16. Revêtement de sol, en particulier parquet ou stratifié, comportant un dispositif de chauffage par le sol selon l'une quelconque des revendications précédentes.

17. Revêtement de sol selon la revendication 16, **caractérisé en ce que** le dispositif de chauffage par le sol (1) est fixé sans espace vide sur la face inférieure du revêtement de sol.
